(19) Europäisches Patentamt
European Patent Office
Office européen des brevets

(11) **EP 1 691 266 A2**

(12) **EUROPEAN PATENT APPLICATION**

(43) Date of publication:
**16.08.2006 Bulletin 2006/33**

(51) Int Cl.:
**G06F 3/033** (2006.01)

(21) Application number: **06250112.7**

(22) Date of filing: **10.01.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Staines, Martin John**<br>**Greens End, London SE18 6HB (GB)** |
| (30) Priority: **11.02.2005 US 56728** | (74) Representative: **Johnstone, Helen Margaret et al**<br>**Eric Potter Clarkson LLP**<br>**Park View House**<br>**58 The Ropewalk**<br>**Nottingham NG1 5DD (GB)** |
| (71) Applicant: **The Bergquist Company**<br>**Chanhassen,**<br>**Minnesota 55317 (US)** | |

(54) **Contact input apparatus for touch screen assemblies**

(57)    A contact input apparatus for providing a linear response throughout an active area of a touch screen assembly including a substrate, a first pattern of relatively low resistance material disposed on a first surface of the substrate and substantially along an outer perimeter thereof, and a second pattern of relatively low resistance material disposed on the first surface of the substrate and extending in substantially parallel relationship with the first pattern along an inner perimeter separately spaced inwardly from the outer perimeter of the substrate. The first and second patterns together define a resistive zone therebetween as an area on the first surface which includes a plurality of discrete resistive pathways that extend between the first and second patterns, with the resistive pathways being formed of one or more materials that have a relatively lower electrical resistivity value than the remainder of the resistive zone.

Fig.-6

## Description

## Field of the Invention

The present invention relates to touch screen assemblies generally, and more particularly to contact input systems which provide a linear response throughout an active area of the touch screen assembly by providing a substantially linear voltage drop about the perimeter of the active area between a voltage application point and a ground.

## Background of the Invention

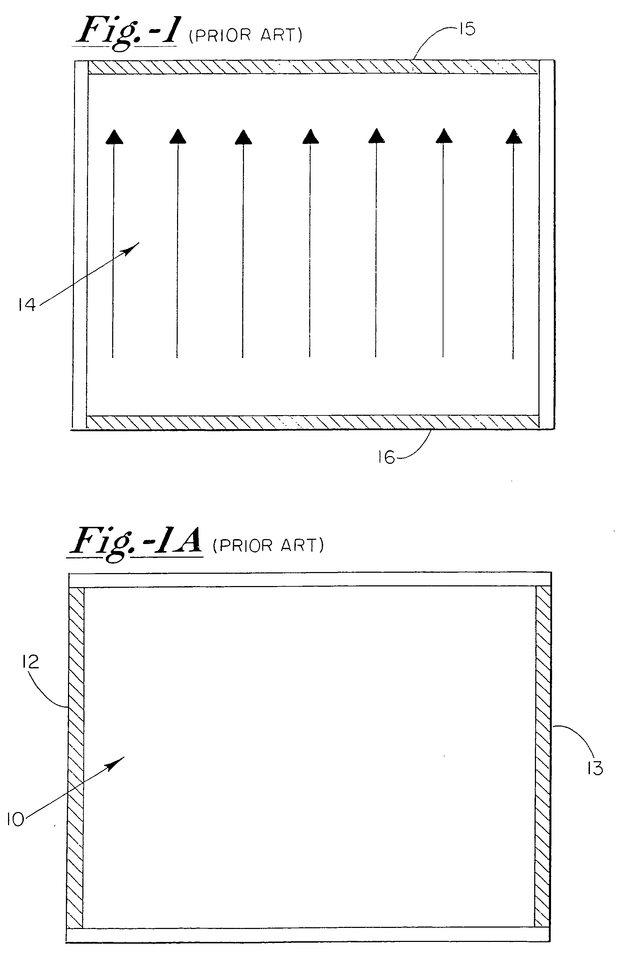

Touch screen assemblies typically utilize either multiple layer or single layer contact input systems for determining a coordinate contact location in an active area of the assembly. Two dimensional voltage-based analog contact input systems require linear voltage drops over a resistive surface in order to best determine the coordinate contact location. One method in which to achieve this is to create two independent voltage drops on separate resistive surfaces. Such a dual layer circuit is a common example of conventional contact input systems. An example of such a conventional system is illustrated in Figures 1 and 1A, which show two relatively high resistance surfaces 10, 14 onto which substantially rectangular opposing electrodes 12, 13, 15, 16 of relatively low resistance material are connected. Such relatively low resistance electrodes evenly distribute the voltages applied, creating a uniform voltage drop between the electrodes.

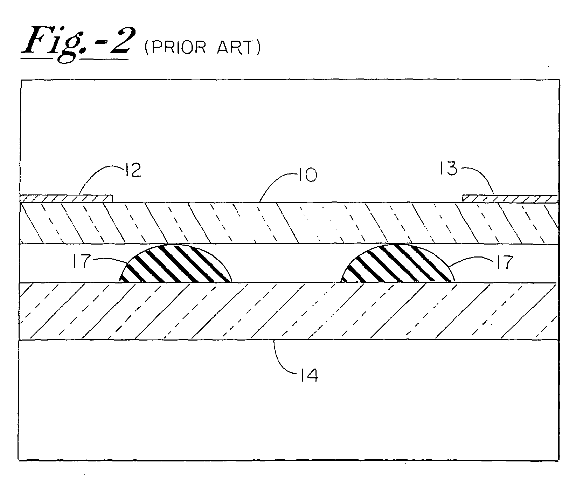

Typically, first and second surfaces 10, 14 are assembled in facing relationship with one another, as is illustrated in Figure 2. First and second surfaces 10, 14 are separated by dielectric spacer dots 17 so as to prevent accidental contact therebetween. However, top surface 10, which is usually a flexible substrate, may be intentionally deformed by an operator's finger or a stylus such that the voltage that applies on the driven circuit's point of actuation will apply to the sensing circuit. Such a measured voltage is subsequently converted into a digital value representing the location of the actuation coordinate.

Once one coordinate has been successfully determined as described above, the respective role of the resistive circuits in the dual layer contact input system is switched, whereby the driven layer that has been used to create the voltage drop to determine the first coordinate now becomes the sensing circuit, while the layer used to sense the first coordinate is used to create a linear voltage drop that is 90° offset relative to the voltage drop previously created to determine the first contact coordinate. Such a perpendicular relationship is achieved by arranging electrodes 12, 13, 15, 16 as shown in Figure 1, with the corresponding electrodes of one layer being orthogonally positioned with respect to the electrodes of the other layer.

Despite the linear nature of a dual layer contact input system, a number of significant drawbacks exist. For example, each layer resistance and uniformity of resistance must remain constant throughout the system's operating life in order to maintain positional accuracy. Such consistency over time, however, is essentially unattainable in real-world applications due to the fact that the resistive coating on the deformable layer tends to fissure and otherwise degrade over time to induce undesired variation in response.

The shortcomings identified above with respect to multiple layer sensing systems are overcome in systems that create both X and Y coordinate voltage drops on a single layer. Systems which sense contact in a single layer can be manufactured using materials that do not change in resistance or where the driven resistive layer is not prone to damage or degradation through continuous use are not influenced by changes to the resistive layer under Kirschhoff's Second Law. Accordingly, single layer contact input systems typically incorporate a single conductively coated layer to obtain a voltage gradient in both the X and Y coordinate directions. Single layer contact input systems, however, do not correctly operate through the use of straight-line low resistance electrodes along the respective edges of the intended active area of the touch screen, as such an electrode configuration operably causes a permanent short-circuit in the screen.

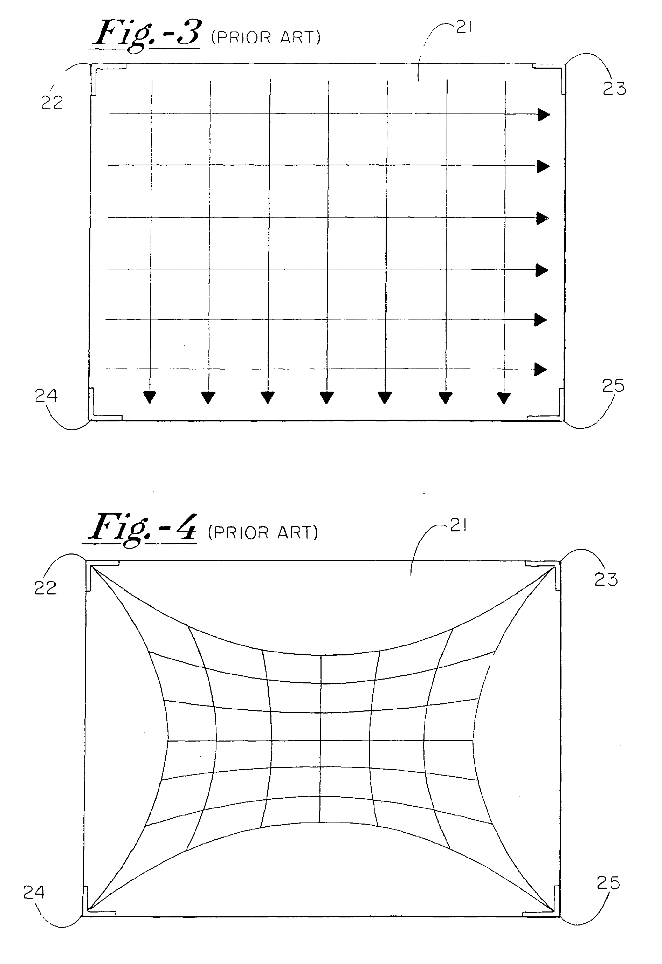

Instead, single layer input systems utilize one or more electrical connection points, such as at the corners of a rectangular screen, as is shown in Figure 3. In the example of the rectangular input system of Figure 3, a voltage drop is created by applying a voltage at application points 22, 24, and grounding the system at application points 23, 25. A first coordinate position may be determined with the voltages being applied at application points 22, 24 while the second coordinate of a contact input may be mapped by reversing one pair of the application points, such as by applying voltage at points 24, 25, and grounds at points 22, 23. Such reversal creates a voltage drop that is offset 90° with respect to the voltage drop that was used to determine the first coordinate of the contact position. As such, the single layer contact input system is able to create the 90° offset voltage drop that is necessary tc determine both the X and Y coordinate positions of the screen contact.

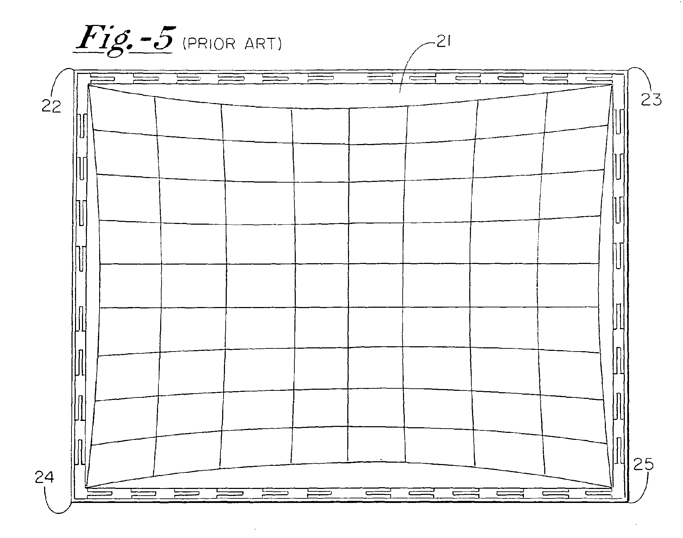

A difficulty encountered through the use of single layer contact input systems, however, is in the distortion of the electric field due to the inherent resistance of the material between the driven and grounded points. Without redress, the contact input field of the system illustrated in Figure 3 results in an operating electric field in the active area illustrated in Figure 4. This electric field distortion results in contact input signals that are not directly associative with the actual contact position, such that algorithms or other interpretative correction measures must be employed by the system in order to ascertain a more accurate contact position indication.

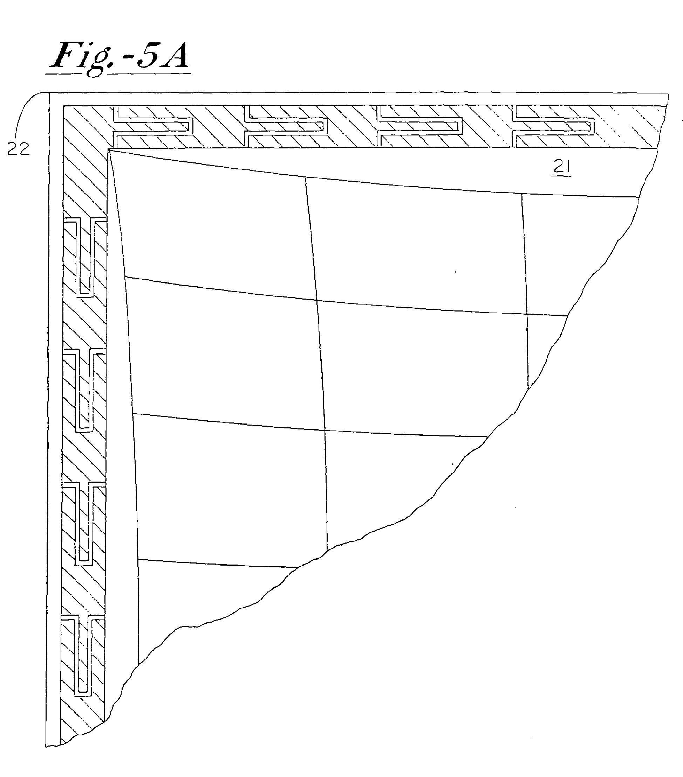

A variety of mechanisms have been developed in an attempt to overcome the electric field distortion and to thereby improve the overall linearity of contact input response. Typically, single layer contact input system manufacturers utilize a set of electrodes applied directly to the resistive material at the perimeter of the contact input layer to reduce the resistance in this area. While the use of multiple adjacent and/or interleaving electrodes improves the overall linearity of the contact input layer, electric field distortion still exists, as the resistance between the driven and respectively grounded portions of the screen cannot be set to zero. An example of a partially improved contact input layer is shown in Figures 5 and 5A, with the distortion of the electric field still visible.

A variety of other methodologies have been developed and incorporated into single layer contact input systems in order to reduce electric field distortion. However, each of the systems proposed to date require relatively wide inactive perimeter areas in order to conceal relatively wide electrode patterns or distorted perimeter portions of the touch responsive area.

A further problem inherent in conventional single layer systems is a "hooking" effect at contact positions adjacent to the near-zero resistance electrodes at the perimeter of the active area. This hooking effect is generally known to be minimized through the use of individual electrodes that are as small as possible. Current techniques for installing electrodes on single layer contact input systems, however, have known limitations.

It is therefore a principal object of the present invention to provide a single layer contact input system that incorporates a large number of electrodes in a small inactive perimeter area, while obtaining a high degree of linear touch response throughout the active area.

It is a further object of the present invention to provide an edge linearization system that is minimally invasive upon the active area of a single layer contact input system.

It is another object of the present invention to provide a single layer contact input system having an edge linearization configuration that incorporates a plurality of distinct and spaced apart low resistance patterns extending about the perimeter of the contact input system.

It is a still further object of the present invention to provide an edge linearization configuration for single layer contact input systems, with the edge linearization configuration incorporating resistive pathways extending between multiple spaced apart low resistance patterns, with the resistive pathways being of differential predetermined resistance so as to linearize voltage drop along the low resistance patterns depending upon the distance from the voltage application site.

## Summary of the Invention

By means of the present invention, a linearly responsive active area is provided for a single layer contact input system. The apparatus of the present invention enables lateral voltage compensation without the use of lateral compensation electrodes, and without involving a parabolic electrode pattern inwardly disposed into the active area. In particular, the present invention incorporates the use of a plurality of distinct and separate patterns of relatively low resistance material with such patterns being disposed about the perimeter of the resistive substrate. In combination with such distinct low resistance material patterns, a plurality of discrete resistive pathways are provided as extending between the two or more low resistance patterns. Such pathways have different resistance values, depending upon their respective proximity to voltage application points in the contact input system.

In a particular embodiment, the contact input apparatus of the present invention includes a substrate, a first pattern of relatively low resistance material disposed on a first surface of the substrate and substantially along an outer perimeter thereof, and a second pattern of relatively low resistance material that is disposed on the first surface and extends in substantially parallel relationship with the first pattern along an inner perimeter separately spaced inwardly from the outer perimeter of the substrate. The first and second patterns collectively define a resistive zone therebetween, with the resistive zone having a plurality of discrete resistive pathways extending between the first and second patterns. The resistive pathways are formed of one or more materials that have a relatively lower electrical resistivity value than the remainder of the resistive zone.

Preferably, the contact input apparatus is substantially rectangular with four sides and four corners and having an active area on the first surface within a perimetorial boundary defined by the second pattern. The first and second patterns may either or both be formed of a plurality of discontinuous electrodes or a continuous trace of relatively low resistance material. The contact input apparatus preferably further includes a plurality of resistive pathways disposed along at least one of the sides, with respective ones of the resistive pathways proximal to respective corners of the substrate being of higher resistance than respective ones of the resistive pathways distal to the respective corners. Moreover, the resistive pathways preferably become progressively lower in resistance from the corners to respective mid-points between the corners.

In another embodiment, the contact input apparatus of the invention includes a substrate having a first substantially uniform resistivity in an active area, and a second discontinuous resistivity in a resistive zone defined between respective first and second patterns of relatively low resistance material which are disposed substantially along an outer perimeter of the substrate. The second pattern is separately inwardly spaced from the first pattern. The resistive zone preferably includes discontinuous portions of relatively high resistivity material defining gaps of relatively low resistivity therebetween, which gaps form a plurality of discrete continuous resistive pathways between the first and second patterns.

The contact input apparatus preferably includes at least one voltage application point at the outer perimeter of the substrate wherein a predetermined voltage may be applied to the first pattern and induced in the second pattern. Preferably, respective ones of the resistive pathways are progressively lower in resistance as the distance from the voltage application point increases, such that an equipotential voltage is created along an entire length parallel to the first and second patterns.

A single sheet resistor-type touch sensor preferably includes a substrate having a voltage application point positioned at a perimeter portion thereof. The touch sensor preferably further includes first and second patterns of relatively low resistance material disposed substantially along the perimeter portion of the substrate, with the second pattern being separately inwardly spaced from the first pattern. A continuous space between the first and second patterns defines a resistive zone which has first portions of a first electrical resistance and second portions of a second electrical resistance. The first portions have a relatively higher electrical resistance than that of the second portions, and are formed in a discontinuous pattern about the perimeter portion. The discontinuous pattern of the first portions define a plurality of continuous pathways solely of the second portions extending from the first pattern to the second pattern. Preferably, the pathways each have a predetermined resistance between the first and second patterns, with the respective resistances of the pathways progressively decreasing as the distance from the voltage application point to respective ones of the pathways increases.

Brief Description of the Drawings

Figure 1 depicts a portion of a dual layer contact input system of the prior art;
Figure 1A depicts a portion of a dual layer contact input system of the prior art;
Figure 2 is a side cross-sectional view of the assembled dual layer contact input system illustrated in Figure 1;
Figure 3 depicts a theoretical single layer contact input system of the prior art;
Figure 4 shows a single layer contact input system of the prior art;
Figure 5 shows a single layer contact input system of the prior art;
Figure 5A is an enlarged view of a portion of the contact input system illustrated in Figure 5;
Figure 6 is a single layer contact input apparatus of the present invention;
Figure 7 is an enlarged view of a portion of the contact input apparatus illustrated in Figure 6;
Figure 8 is a view of the contact input apparatus illustrated in Figure 6 with the voltage polarity being reversed;
Figure 9 is an enlarged view of a portion of a single layer contact input apparatus of the present invention;
Figure 10 is a single layer contact input apparatus of the present invention;
Figure 10A is an enlarged view of a portion of the single layer contact input apparatus illustrated in Figure 10;
Figure 11 is a single layer contact input apparatus of the present invention; and
Figure 11A is an enlarged view of a portion of the single layer contact input apparatus illustrated in Figure 11.

Detailed Description of the Preferred Embodiments

The objects and advantages enumerated above together with other objects, features, and advances represented by the present invention will now be presented in terms of detailed embodiments described with reference to the attached drawing figures which are intended to be representative of various possible configurations of the invention. Other embodiments and aspects of the invention are recognized as being within the grasp of those having ordinary skill in the art.

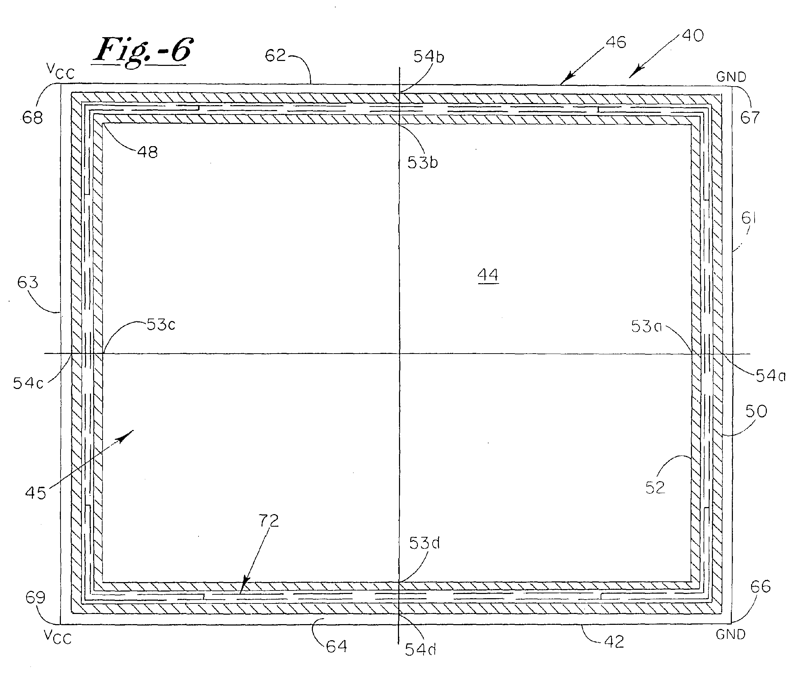

One embodiment of the present invention is illustrated in Figure 6, with contact input apparatus 40 including a substrate 42 having a first surface 44 upon which first and second patterns 50, 52 of relatively low resistance material are disposed. First pattern 50 preferably extends along an outer perimeter 46 of substrate 42, with second pattern 52 extending about substrate 42 in substantially parallel relationship with first pattern 50. As illustrated in Figure 6, second pattern 52 extends along an inner perimeter 48 of substrate 42 that is separately spaced inwardly from outer perimeter 46. Though second pattern 52 is illustrated in Figure 6 as extending in substantially parallel relationship with first pattern 50, the present invention contemplates a variety of relative configurations for first and second patterns 50, 52. For example, second pattern 52 may bow outwardly toward first pattern 50 along a parabolic path having an apex at respective mid-points 53A, 53B, 53C and 53D of sides 61, 62, 63 and 64, respectively. Alternatively, first pattern 50 may bow inwardly toward second pattern 52 along respective parabolic paths along one or more of sides 61, 62, 63, and 64, preferably having apices at mid-points 54A, 54B, 54C, and 54D of first pattern 50. Moreover, both of first and second patterns 50, 52 may bow toward one another, or may instead follow other nonlinear configurations, as may be desired per application.

Substrate 42 is preferably a substantially resistive body fabricated from glass, plastic, or the like, and may further include one or more resistive coatings disposed on first surface 44 thereof. Such coatings may include, for example, semi-conducting metal oxide, such as indium-tin oxide (ITO), tin oxide, tin antimony oxide, indium oxide, carbon materials, or the like. Prefabricated substrates having a substantially uniform resistivity surface are widely commercially available. Substrate 42 may, but is not required to, include a resistive coating on first surface 44.

Substrate 42 is illustrated in the figures as defining a substantially rectangular area having four sides 61, 62, 63, 64 and four corners 66, 67, 68, 69. Substrate 42, however, may define perimeter configurations other than a rectangle, and may be planar, cylindrical, or complex in two dimensions.

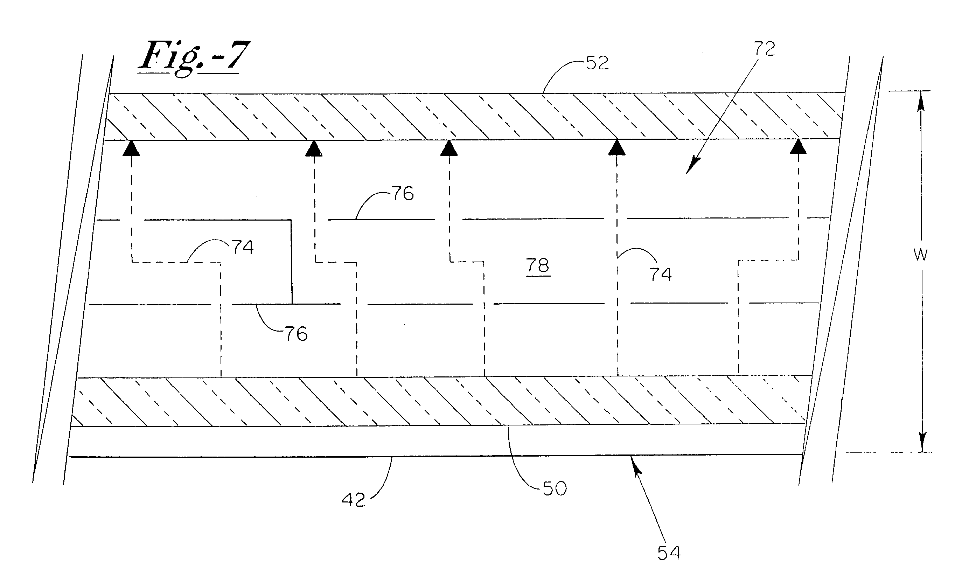

As is further illustrated in Figure 6, first and second patterns 50, 52 define a resistive zone 72 therebetween on first surface 44. Resistive zone 72 is illustrated in greater detail in Figure 7, which illustrates a portion of contact input apparatus 40. Resistive zone 72 preferably includes areas of dissimilar resistivity defining a plurality of discrete resistive pathways 74 between first and second patterns 50, 52. Resistive pathways 74 are illustrated in Figure 7 by dashed lines representing the paths of least electrical resistance between respective portions of first and second patterns 50, 52. Such resistive pathways 74 are therefore discretely defined by discontinuous patterns of electrically resistive material in the form of detour segments 76, and which together form a detour pattern 78. As such, resistive pathways 74 are formed of one or more materials having a relatively lower electrical resistivity value than the materials making up detour pattern 78, which forms the remainder of resistive zone 72.

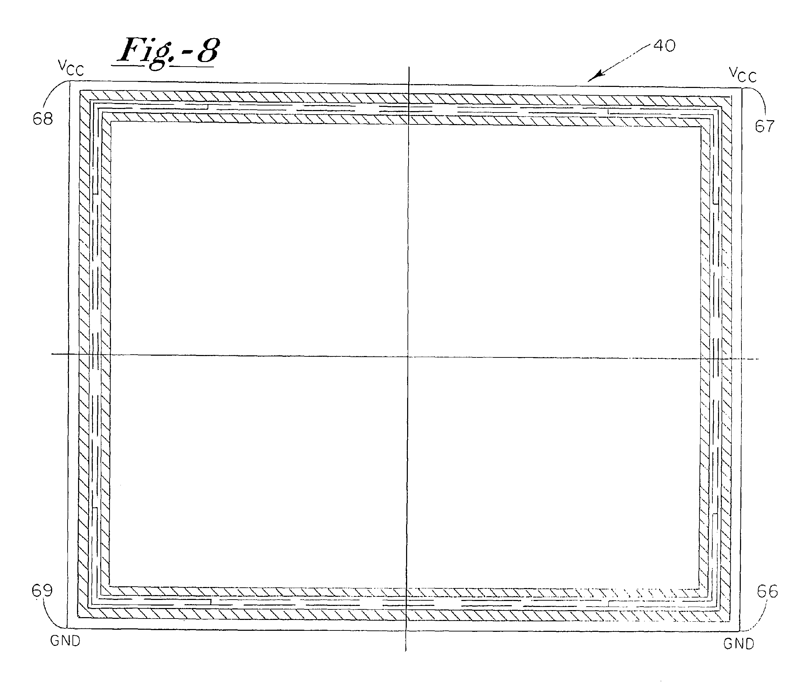

As described above, a primary purpose of the present invention is to provide a linearly responsive active area 45 of apparatus 40. A first aspect of obtaining linear response in active area 45 is the provision of lateral compensation or "bow effect" reduction by equalizing voltage drop across all electrodes in apparatus 40 between voltage application points and ground points, if any. Such voltage application points and ground points are demonstrated in Figure 6 by corners 66, 67, 68, 69. To effectuate obtaining both X and Y axis coordinate positions of a touch event in active area 45, a 90° voltage drop offset functionality is applied by, in the case of rectangular apparatus 40, reversing the polarity of one set of diagonally opposing corners, such as corners 67, 69. Such a relationship is illustrated in the progression between Figures 6 and 8,

wherein corner 69 is initially provided with a voltage potential and corner 67 being grounded, and subsequently switching the characteristics of such corners so that corner 67 receives a voltage potential while corner 69 is grounded. Lateral compensation to first and second patterns 50, 52 during application of electrical potential thereto is provided by the novel arrangement illustrated in Figure 7. In order to create an equal voltage potential at the active area of apparatus 40 and each portion of first and second patterns 50, 52 that are used to create the respective high and low potentials of the system, paths of disparate resistivity between first and second electrodes 50, 52 are generated.

In order to counteract the natural resistance drop toward the center of each electrode leg defining sides 61, 62, 63, 64, the resistance between first and second patterns 50, 52 is preferably adjusted depending upon the distance from the voltage application points and/or ground points of system 40. More specifically, where both corners of a respective electrode side are set to an equal voltage potential (either applied voltage or ground) the assigned voltage typically drops in the electrode pattern between the respective corners due to inherent electrical resistance in the electrode patterns. To overcome the voltage discrepancy as across the electrodes, apparatus 40 of the present invention incorporates a means for adding more resistance to portions of second pattern 52 which are proximate to the respective corners, as compared to portions of second pattern 52 which are distal from the respective corners. Such added resistance is obtained at resistive zone 72 by incorporating electrically resistive material separatively between first and second patterns 50, 52. Moreover, the differences in "added" resistance to second pattern 52 depending upon the distance from a respective corner of apparatus 40 is obtained by changing the amount of electrical resistance disposed between first and second patterns 50, 52 as a function of the distance from the respective corners defining an electrode leg. In preferred embodiments, the changes in resistivity between first and second patterns 50, 52 is enabled by creating pathways of relative conductance having different lengths, widths, and/or materials such that the resistance decreases as the pathway length, and/or material resistance decreases, and/or the pathway width increases between first and second patterns 50, 52. In the embodiment illustrated in Figure 7, respective pathways 74 disposed proximal to the respective corners of an electrode leg are relatively longer than pathways 74 disposed more distally from such respective corners. For example, pathway 74 at mid-point 54 of the electrode leg is the shortest pathway since it represents the most distal pathway between first and second patterns 50, 52 from the respective corners of the electrode leg.

As shown in Figure 7, pathways 74 are made to be relatively shorter or longer by the predetermined placement of detour segments 76 in resistive zone 72 in a staggered relative orientation. Due to the fact that detour segments 76 are formed of a material having a higher electrical resistivity than the remainder of resistive zone 72, or at least higher than pathways 74, staggering such detour segments with respect to one another in a configuration similar to that shown in Figure 7 causes the path of least electrical resistance to be diverted therearound. Thus, staggering of detour segments 76 to a predetermined degree provides pathways 74 of different lengths, and therefore different total electrical resistivity.

Pathways 74 may also or instead be provided with predetermined disparate levels of resistance by adjusting the respective widths thereof. Since the total resistivity of any given pathway 74 is reduced as a function of increasing width, pathways 74 disposed proximal to the respective corners of an electrode leg may be relatively narrower than pathway 74 disposed more distally from such respective corners. Moreover, a combination of varying lengths and widths may be utilized by the present invention to effect a diminishing resistivity characteristic as between first and second patterns 50, 52 as the distance from respective corners increases.

A variety of materials are contemplated for use in resistive zone 72 of apparatus 40. In an exemplary preferred embodiment, first surface 44 of substrate 42 may be coated with a resistive material such as ITO. Such resistive material coating, however, is preferably less electrically resistive than the base substrate, such that detour segments 78 may be formed by partial removal of the resistive coating at resistive zone 72 to form a detour pattern 78 having a higher electrical resistance than the remaining resistive coating. In a particular embodiment, such resistive coating removal to form detour pattern 78 may be performed through known deletion techniques. In other embodiments, however, detour segments 76 may be formed of electrically resistive material that is screen printed or otherwise disposed upon substrate 42 at resistive zone 72. Likewise, such electrically resistive material deposition may be done over a resistive material coating such as ITO or the like. Application of such electrically resistive materials in a discontinuous pattern for detour pattern 78 may be accomplished through a variety of known techniques, including screen printing, vapor deposition, and the like.

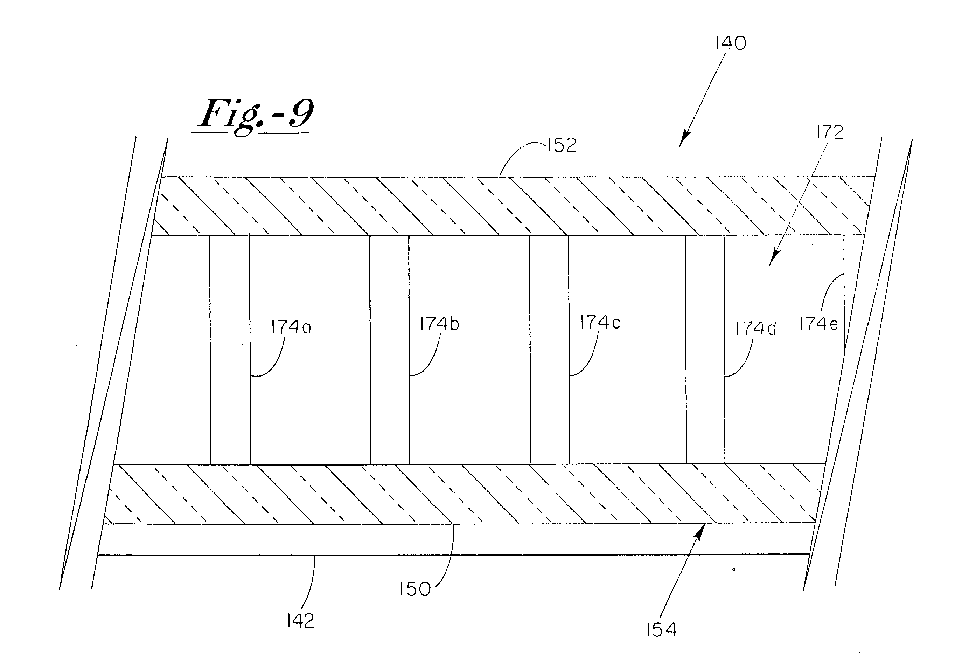

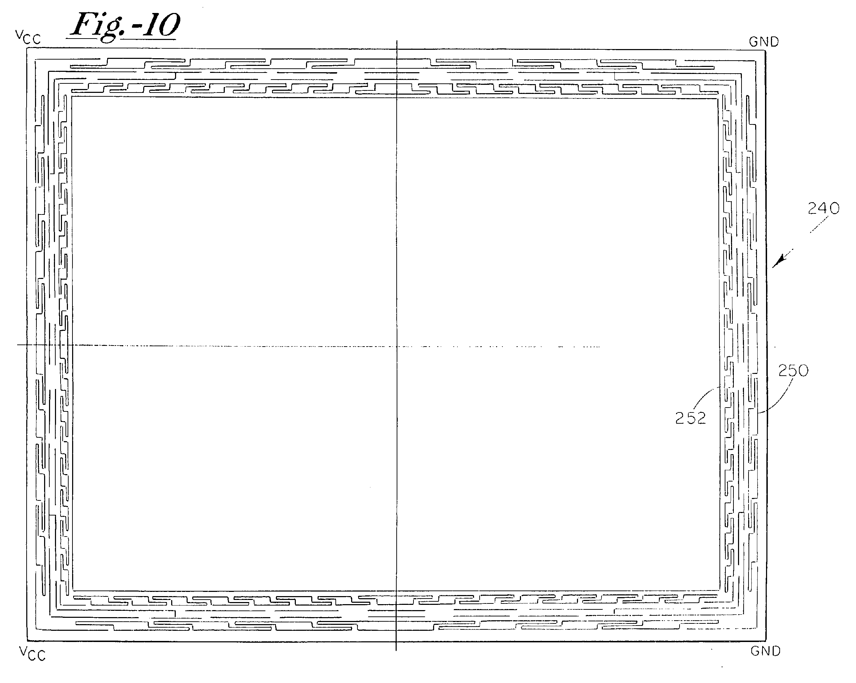

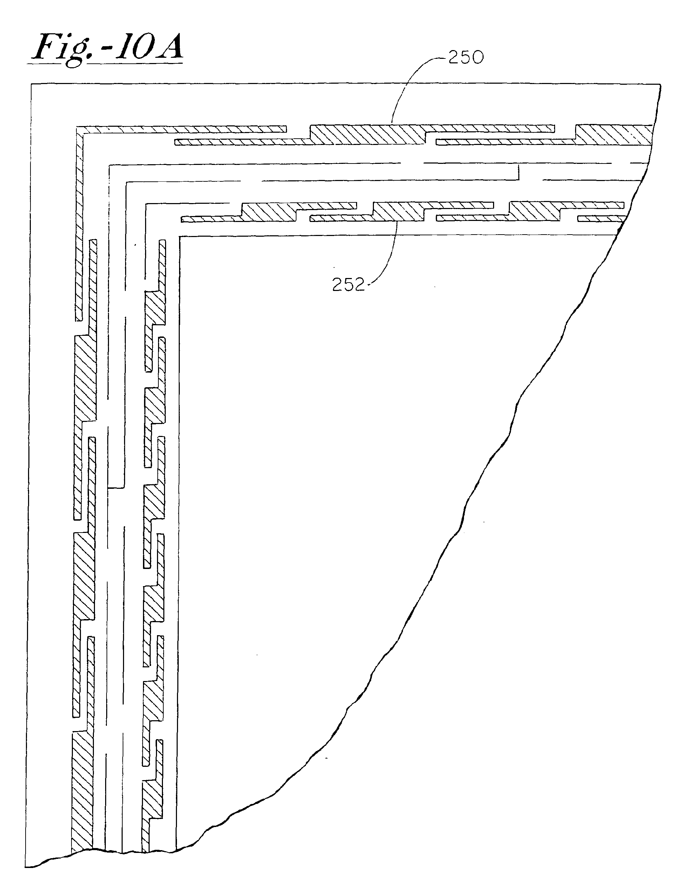

A further embodiment of the present invention is illustrated in Figure 9, with resistive zone 172 including a plurality of distinct pathways 174A-E extending between first and second patterns 150, 152. In order to accomplish the disparate resistance additive measures as described above, each of pathways 174A-E are preferably formed from a different material having different electrical resistivity values. As such, pathway 174A preferably has a higher electrical resistivity than pathway 174B, and pathway 174B is fabricated from a material having a relatively higher electrical resistivity than pathway 174C, and so on. Since pathway 174D is positioned substantially at mid-point 154 of the respective side of apparatus 140, pathway 174D is preferably fabricated from a material having the lowest electrical resistivity of all materials utilized in pathways 174 of the arrangement described in Figure 10. Of course, corresponding pairs of pathways 174 being substantially the same distance from respective corners of the side may be fabricated from identical materials, provided that pathways disposed more distally from the respective corners incorporate a relatively lower electrical resistivity value.

In the embodiments illustrated in Figures 7 and 9, it is contemplated by the present invention that respective pathways 74, 174 may have calibrated resistivity values which correspond to the total amount of voltage drop compensation needed in the particular application. In other words, each pathway 74, 174 may be provided with a predetermined electrical resistivity that is appropriate for its respective share in assuming the overall load of voltage drop compensation being performed across each side of the contact input apparatus.

As stated above, first and second patterns 50, 52 are preferably fabricated from a relatively low electrical resistance material, such as conductive or semi-conductive material. In preferred embodiments, first and second patterns 50, 52 are fabricated from metallic material such as silver, gold, or other conductive metals. Such metallic materials may, for example, be applied in ink form into desired configurations of first and second patterns 50, 52.

Moreover, first and second patterns 50, 52 may be formed in a variety of configurations, including both continuous and discontinuous segments of relatively low resistance material. In the embodiments illustrated in Figures 6-9, first and second patterns 50, 52 form electrodes defining a continuous trace of relatively low resistance material about the perimeter of substrate 42. Though, as described above, continuous traces of relatively low resistance material involve the drawback of incurring a large current draw, it is contemplated by the present invention to utilize materials in first and second patterns of medium conductivity, which is less resistant than active area 45 and resistive zone 72. Such medium conductivity materials may include, for example, semi-conductive materials.

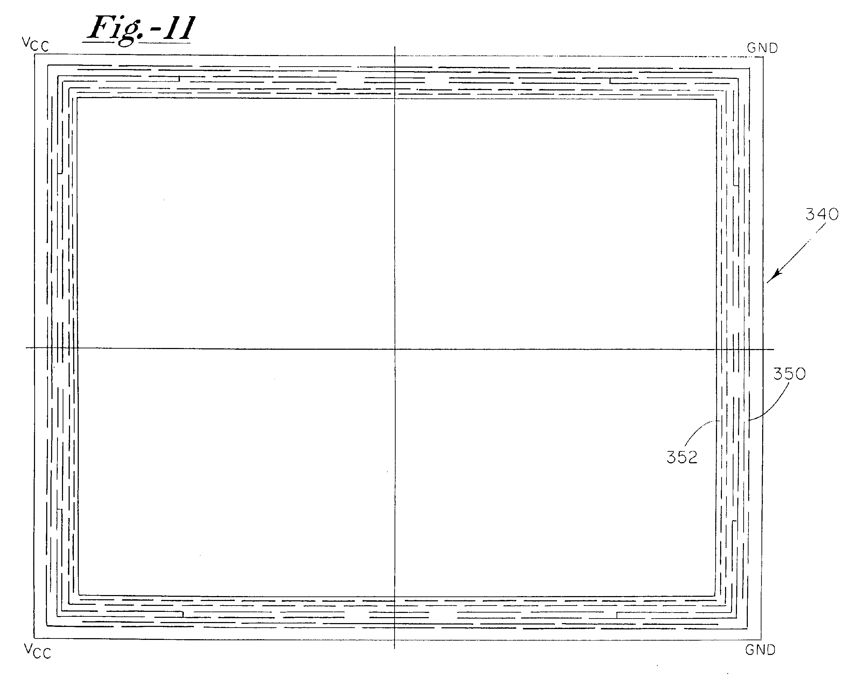

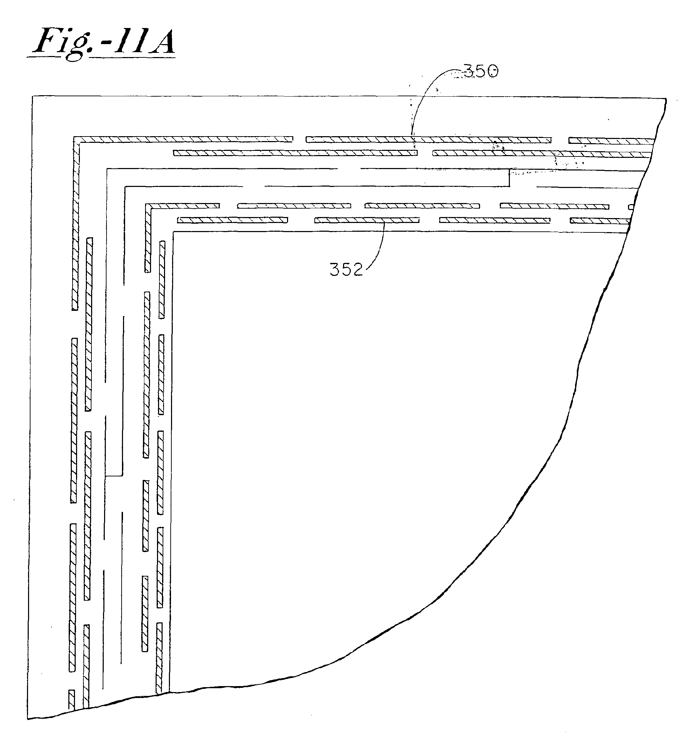

In other embodiments, however, a plurality of discontinuous electrodes define each of first and second patterns 50, 52. Figures 10 and 10A illustrate a preferred embodiment of contact input apparatus 240 utilizing a plurality of discontinuous electrodes for first and second patterns 250, 252. Such electrodes are spaced apart, but include interleaving and/or overlapping portions to reduce the resistance, and therefore voltage drop therebetween. A further example of a discontinuous electrode pattern for the first and/or second patterns is shown in Figures 11 and 11A, wherein first and second patterns 350, 352 incorporate a series of overlapping electrode segments. A wide variety of interleaving and/or overlapping electrode segment patterns are contemplated for use in the present invention, and are well known in the art. As such, various combinations of continuous or discontinuous electrode segments and configurations may be incorporated into the contact input apparatus of the present invention. Accordingly, the examples identified in the drawing figures are not intended to be restrictive of the various types and configurations of electrodes that may be incorporated into the invention.

A further advantage introduced by the contact input apparatus of the present invention is the minimization of discontinuous voltage drops at the perimeter of the active area adjacent the string of electrodes of the electrode leg through the utilization of a substantially larger number of electrode segments. A hooking effect is typically found in conventional contact input systems at the perimeter of the active area due to the proximity of substantially conductive electrode segments. The hooking effect can be minimized through the utilization of a smaller sized electrodes, such that the difference in voltage potential between adjacent electrode segments is reduced. Such an effect may be demonstrated by the following relationship to determine the resistance of each electrode in an electrode leg:

$$R_E = \frac{R_S \cdot L \cdot N}{W}$$

Wherein $R_s$ is the nominal resistive value of the high resistance uniform substrate;

L is the distance of overlap between adjacent electrode segments;

W is the spacing between adjacent electrode segments; and

N is the number of resistor gaps in the electrode leg.

Each electrode leg preferably creates: (1) an equipotential voltage on all inner electrodes of the electrode leg between the closest driven or grounded point of an electrode pair, when both points are set to an equal potential; and (2) a linear voltage drop throughout the entire length of the electrode leg when two voltage potentials are applied, such as in applying a voltage to one corner of the electrode leg and grounding its opposing counterpart. In order to create an equipotential voltage on all inner electrodes, the conductive corner segments of the electrode leg are either set to a predetermined voltage or ground while the electrodes attached to the same corner at a 90° offset are set to the alternate potential (either voltage potential or ground).

As shown, for example, in Figure 10, second pattern 252 may include more electrode segments than first pattern 250 in order to further reduce the hooking effect associated with conventional contact input systems. Moreover, by operably coupling only every second or third electrode of second pattern 252 to an electrode in first pattern 250 via a resistive pathway, such as is illustrated in Figure 8 by reference numeral 74, the electrodes of second pattern 252 intermediate those operably coupled to first pattern 250 function as bridge electrodes that evenly distribute the voltage when an equipotential is applied to both ends of the respective electrode leg.

A further advantage introduced by the contact input system of the present invention is in the substantial reduction of the perimetorial area dedicated to lateral compensation electrodes. In preferred embodiments, width "W" of the perimetorial area outside the active area 45 of apparatus 40 is between about 3 and 5 mm. By contrast, such a width dimension in conventional contact input systems is typically between about 10 and 20 mm. As a result, a substantially larger active area may be obtained without enlarging the overall contact input apparatus.

The invention has been described herein in considerable detail in order to comply with the patent statutes, and to provide those skilled in the art with the information needed to apply the novel principles and to construct and use embodiments of the invention as required. However, it is to be understood that the invention can be carried out by specifically different devices and that various modifications can be accomplished without departing from the scope of the invention itself.

**Claims**

1. A contact input apparatus for use in touch screen assemblies, said contact input apparatus comprising:

   (a) a substrate;
   (b) a first pattern of relatively low resistance material disposed on a first surface of said substrate and substantially along an outer perimeter thereof;
   (c) a second pattern of relatively low resistance material disposed on said first surface of said substrate and extending in substantially parallel relationship with said first pattern along an inner perimeter separately spaced inwardly from said outer perimeter of said substrate;
   (d) a resistive zone being defined by an area on said first surface between said first and second patterns, said resistive zone having a plurality of discrete resistive pathways extending between said first and second patterns, said resistive pathways being formed of one or more materials having a relatively lower electrical resistivity value than the remainder of said resistive zone.

2. A contact input apparatus as in Claim 1, including an active area on said first surface of said substrate and within a perimetorial boundary defined by said second pattern.

3. A contact input apparatus as in Claim 1 wherein said first pattern comprises a plurality of discontinuous electrodes.

4. A contact input apparatus as in Claim 1 wherein said first pattern comprises a continuous trace of relatively low resistance material.

5. A contact input apparatus as in Claim 1 wherein said second pattern comprises a plurality of discontinuous electrodes.

6. A contact input apparatus as in Claim 1 wherein said second pattern comprises a continuous trace of relatively low resistance material.

**7.** A contact input apparatus as in Claim 1 wherein said second pattern is spaced from said first pattern by between about 0.2 and 10mm.

**8.** A contact input apparatus as in Claim 1, including a first resistive material layer disposed on said resistive zone, said first resistive material layer having a relatively lower electrical resistivity value than the electrical resistivity value of said substrate.

**9.** A contact input apparatus as in Claim 8 wherein said resistive pathways are formed of said first resistive material layer.

**10.** A contact input apparatus as in Claim 9 wherein said resistive pathways are configured by partial removal of said first resistive material layer from said resistive zone.

**11.** A contact input apparatus as in Claim 10 wherein said partial removal is accomplished through resistive material layer deletion.

**12.** A contact input apparatus as in Claim 1 wherein said substrate is substantially rectangular with four sides and four corners.

**13.** A contact input apparatus as in Claim 12, including a plurality of said resistive pathways being disposed along at least one of said sides, with respective ones of said resistive pathways proximal to respective corners of said substrate being greater in resistance than respective ones of said resistive pathways distal to respective said corners.

**14.** A contact input apparatus as in Claim 13 wherein said resistive pathways become progressively lower in resistance from said corners to respective midpoints between said corners.

**15.** A contact input apparatus for use in touch screen assemblies, comprising:

(a) a generally rectangular substrate having four sides and four corners;
(b) a first pattern of relatively low resistance material disposed on a first surface of said substrate and substantially along an outer perimeter thereof;
(c) a second pattern of relatively low resistance material disposed on said first surface of said substrate and extending in substantially parallel relationship with said first pattern along an inner perimeter separately spaced inwardly from said outer perimeter of said substrate, said first and second patterns being operably coupled through a plurality of distinct resistive pathways of one or more materials having a substantially higher resistivity value than that of said first and second patterns.

**16.** A contact input apparatus as in Claim 15, including a resistive zone being defined by an area on said first surface between said first and second patterns.

**17.** A contact input apparatus as in Claim 16 wherein said resistive pathways are formed of one or more materials having a relatively lower electrical resistivity value than the remainder of said resistive zone.

**18.** A contact input apparatus as in Claim 15, including a resistive coating on said first surface of said substrate.

**19.** A contact input apparatus as in Claim 18 wherein said resistive coating has a lower electrical resistivity value than the electrical resistivity value of said substrate.

**20.** A contact input apparatus for providing a linear response throughout an active area of a touch screen assembly, said contact input apparatus comprising;

(a) a substrate having a first substantially uniform resistivity in said active area, and a second discontinuous resistivity in a resistive zone defined between respective first and second patterns of relatively low resistance material disposed substantially along an outer perimeter of said substrate, said second pattern being separately inwardly spaced from said first pattern, said resistive zone having discontinuous portions of relatively high resistivity material defining gaps of relatively low resistivity therebetween, which gaps form a plurality of discrete continuous resistive pathways between said first and second patterns.

**21.** A contact input apparatus as in Claim 20, including at least one voltage application point at said outer perimeter of said substrate wherein a predetermined voltage may be applied to said first pattern.

**22.** A contact input apparatus as in Claim 21 wherein respective ones of said resistive pathways are progressively less resistive as the distance from said voltage application point increases, such that a linear voltage drop is created throughout the active area.

**23.** A contact input apparatus as in Claim 20 wherein said first and second patterns are continuously mutually spaced apart by between about 0.5 and 5mm.

**24.** A single sheet resistor type touch sensor having a substantially linear response throughout an active area thereof, said sensor comprising:

(a) a substrate having a voltage application point positioned at a perimeter portion thereof; and

(b) first and second patterns of relatively low resistance material disposed substantially along said perimeter portion of said substrate, said second pattern being separately inwardly spaced from said first pattern, a continuous space between said first and second patterns defining a resistive zone having first portions of a first electrical resistance, and second portions of a second electrical resistance, said first portions having a relatively higher electrical resistance than that of said second portions, and being formed in a discontinuous pattern about said perimeter portion, said discontinuous pattern of said first portions defining a plurality of continuous pathways solely of said second portions extending from said first pattern to said second pattern.

25. A sensor as in Claim 24 wherein said pathways each have a predetermined length between said first and second patterns, with the respective lengths of said pathways progressively decreasing as the distance from said voltage application point to respective ones of said pathways generally increases.

26. A sensor as in Claim 24 wherein said pathways each have a predetermined resistance between said first and second patterns, with the respective resistances of said pathways progressively decreasing as the distance from said voltage application point to respective ones of said pathways generally increases.

*Fig.-1* (PRIOR ART)

*Fig.-1A* (PRIOR ART)

*Fig.-2* (PRIOR ART)

*Fig.-3* (PRIOR ART)

*Fig.-4* (PRIOR ART)

*Fig.-5* (PRIOR ART)

# *Fig.-5A*

22

21

EP 1 691 266 A2

*Fig.-6*

V_CC   62   54b   46   40   GND

68   48   53b   67

61

63   44

53c   53a

54c   54a

50

45   52

72   53d

69   64   54d   42   66

V_CC   GND

Fig.-7

*Fig.-8*

V<sub>CC</sub>    40    V<sub>CC</sub>

68    67

69    66

GND    GND

EP 1 691 266 A2

*Fig.-9*

Fig.-10

*Fig.-10A*

Fig.-11

*Fig.-11A*

350

352